# EUROPEAN PATENT SPECIFICATION

(11) **EP 2 372 637 B1**
(45) Date of publication and mention of the grant of the patent: **03.07.2013**
(21) Application number: 10002115.3
(22) Date of filing: 02.03.2010
(51) Int. Cl.: G06T 5/40, G06K 9/36

(54) **A driver assistance system and method for a motor vehicle**
Fahrerassistenzsystem und -verfahren für ein Kraftfahrzeug
Système d'assistance au conducteur et procédé pour véhicule à moteur

(43) Date of publication of application: 05.10.2011
(73) Proprietor: Autoliv Development AB, 447 83 Vårgårda (SE)
(72) Inventor: Cronvall, Per, 58332 Linköping (SE); Olsson, Patric, 60232 Norrköping (SE)
(74) Representative: Müller Verweyen

(56) References cited:
- EP-A1- 1 703 462
- US-A1- 2008 317 358
- US-A1- 2009 087 041
- HORIO K ET AL: "An intuitive contrast enhancement of an image data employing the self-organizing relationship (SOR)" NEURAL NETWORKS, 1999. IJCNN '99. INTERNATIONAL JOINT CONFERENCE ON WASHINGTON, DC, USA 10-16 JULY 1999, PISCATAWAY, NJ, USA,IEEE, US LNKD- DOI:10.1109/IJCNN.1999.833507, vol. 4, 10 July 1999 (1999-07-10), pages 2710-2714, XP010373212 ISBN: 978-0-7803-5529-3
- QUOC BAO TRUONG ET AL: "Lane boundaries detection algorithm using vector lane concept" CONTROL, AUTOMATION, ROBOTICS AND VISION, 2008. ICARCV 2008. 10TH INTERNATIONAL CONFERENCE ON, IEEE, PISCATAWAY, NJ, USA LNKD- DOI:10.1109/ICARCV.2008.4795895, 17 December 2008 (2008-12-17), pages 2319-2325, XP031433963 ISBN: 978-1-4244-2286-9
- JUAN CALDERON ET AL: "Road Detection Algorithm for an Autonomous UGV based on Monocular Vision" ELECTRONICS, ROBOTICS AND AUTOMOTIVE MECHANICS CONFERENCE, 2007. CERMA 2007, IEEE, PISCATAWAY, NJ, USA, 1 September 2007 (2007-09-01), pages 253-259, XP031152913 ISBN: 978-0-7695-2974-5
- SHIGEO SAKAUE ET AL: "DYNAMIC RANGE EXPANSION OF VIDEO CAMERAS BY ADAPTIVE GAMMA PROCESSING" INTERNATIONAL CONFERENCE ON CONSUMER ELECTRONICS - DIGEST OF TECHNICAL PAPERS. ROSEMONT, JUNE 7 - 9 1995; [INTERNATIONAL CONFERENCE ON CONSUMER ELECTRONICS - DIGEST OF TECHNICAL PAPERS], NEW YORK, IEEE, US, vol. CONF. 14, 7 June 1995 (1995-06-07), page 118/119, XP000547755 ISBN: 978-0-7803-2141-0
- PREETI BAJAJ ET AL: "Soft Computing Based Real-Time Traffic Sign Recognition: A Design Approach", 17 August 2005 (2005-08-17), KNOWLEDGE-BASED INTELLIGENT INFORMATION AND ENGINEERING SYSTEMS; [LECTURE NOTES IN COMPUTER SCIENCE;LECTURE NOTES IN ARTIFICIAL INTELLIGENCE;LNCS], SPRINGER-VERLAG, BERLIN/HEIDELBERG, PAGE(S) 1070 - 1074, XP019015265, ISBN: 978-3-540-28894-7
- CHIOU-SHANN FUH ET AL: "Road-sign detection and tracking", IEEE TRANSACTIONS ON VEHICULAR TECHNOLOGY, IEEE SERVICE CENTER, PISCATAWAY, NJ, US, vol. 52, no. 5, 1 September 2003 (2003-09-01), pages 1329-1341, XP011101020, ISSN: 0018-9545, DOI: 10.1109/TVT.2003.810999

## Description

The invention relates to a driver assistance system for a motor vehicle, comprising an imaging means adapted to record images from a surrounding of the motor vehicle, a processing means adapted to perform image processing of images recorded by said imaging means, and driver assistance means controlled depending on the result of said image processing. The invention furthermore relates to a corresponding driver assistance method.

The efficiency and reliability of a driver assistance system critically depends on a sufficient contrast of the recorded images at least in the areas of interest for the specific application. In order to reduce contrast deterioration due to brightness variations over time in the scene different methods are known to control, based on image processing of the recorded images, image exposure/gain settings of the image sensor. This is described for example in EP 1 074 430 B1 and DE 103 18 499 B4. However, there is a constant demand for further increased contrast in the recorded images under different conditions.

EP 1 703 462 A1 discloses a driver assistance system according to the preamble of claim 1.

K. Horio et al., "An Intuitive Contrast Enhancement of an Image Data Employing the Self-Organizing Relationship (SOR)", International Joint Conference on Neural Networks, Washington DC, 1999, IEEE, vol. 4 pp. 2710-2714, discloses the use of a self-organizing relationship (SOR) network providing an image input/output relationship between an intensity histogram and an intensity mapping curve based on user intuition. The intensity histogram of the image which should be enhanced is applied to the SOR network and the desired intensity mapping curve is generated by execution of the SOR network.

The object of the invention is to provide a driver assistance system and method with an increased contrast in the recorded images at least in the areas of interest.

The invention solves this object with the features of the independent claims. By applying an intensity range reduction algorithm, the intensity range available in the subsequent image processing can be focused to the intensity range of interest. In this manner the contrast can be maximized in the intensity range of interest, while the information loss can essentially be confined to the less interesting intensity regions. Range reduction comprises a step of clipping at least one intensity sub-region in a recorded image, or more generally condensing at least one intensity sub-region in a recorded image to a smaller intensity interval.

The intensity range reduction algorithm uses at least one range reduction parameter, in particular an intensity threshold. Preferably the intensities in the recorded image falling beyond the intensity threshold are clipped, i.e. not taken into account in the further image processing. This is advantageous because extreme intensity regions in the recorded images are usually less interesting for most applications and can frequently be clipped without much information loss in the intensity regions of interest. The intensity range reduction algorithm may apply a low intensity threshold, where intensities below the low intensity threshold are clipped, i.e. set to the low intensity threshold, and/or a high intensity threshold, where intensities above the high intensity threshold are clipped, i.e. set to the high intensity threshold.

According to the invention the range reduction parameter is estimated by a regression function from a characteristic quantity derived from said image data, in particular a feature vector. The dynamic generation of optimized range reduction parameters for the intensity range reduction algorithm by the regression function allows using the same intensity range reduction algorithm for different applications, for example for cameras using different wavelength intervals or different vehicle models. It is therefore no longer necessary to devise a specific intensity range reduction algorithm for every particular application.

The regression function is obtained by a training algorithm from training image data. The training algorithm is preferably based on non-parametric regression, for example support vector regression or neural network techniques. The training data expediently comprises a plurality of characteristic quantities, in particular feature vectors, derived from training image data. Furthermore, the training data preferably comprises at least one predetermined range reduction parameter for every training image, forming ground truth data for the training process.

In a preferred embodiment, for a particular training image the predetermined range reduction parameter is automatically chosen such that the intensity range to be processed further includes the intensities of at least one selected area, more generally selected data, in said training image data. In an object detection application, this area may in particular be selected to cover, or correspond to, objects to be detected, like pedestrians or other vehicles. For example, by choosing intensity thresholds for the training as the maximum and/or minimum intensities of labelled pedestrians in the training images it can be guaranteed that the pedestrian intensities lie in the selected range. However, the invention is not limited to automatically determining suitable range reduction parameter for the training. In other embodiments, the at least one range reduction parameter used in the training can be manually set.

The characteristic quantity derived from the image data and used by the regression function preferably comprises an intensity/brightness distribution or spectrum of the image data, which may have the form of a histogram. The characteristic quantity comprises data from at least one vehicle-mounted sensor, in particular from an ambient temperature sensor.

In the following the invention shall be illustrated on the basis of preferred embodiments with reference to the accompanying drawings, wherein:
- Fig. 1: shows a schematic illustration of a driver assistance system for a motor vehicle;
- Fig. 2: shows a flow diagram illustrating an intensity range reduction process;
- Fig. 3: shows a diagram illustrating an intensity spectrum and a mapping function; and
- Fig. 4: shows a flow diagram illustrating a training process for obtaining a regression function.

The driver assistance system 10 is mounted in a motor vehicle and comprises an imaging means 11 for recording images of a region surrounding the motor vehicle, for example a region in front of the motor vehicle. Preferably the imaging means 11 comprises one or more optical and/or infrared imaging devices 12, in particular cameras, where infrared covers near IR with wavelengths below 5 microns and/or far IR with wavelengths beyond 5 microns. Preferably the imaging means 11 comprises a plurality imaging devices 12a, 12b in particular forming a stereo imaging means 11; alternatively only one imaging device forming a mono imaging means can be used.

The imaging means 11 is preferably coupled to an image pre-processor 13 adapted to control the capture of images by the imaging means 11, receive the electrical signal containing the image information from the imaging devices 12a, 12b, warp pairs of left/ right images into alignment and/or create disparity images, which per se is known in the art. The image pre-processor 13 may be realized by a dedicated hardware circuit. Alternatively the pre-processor 13, or part of its functions, can be realized in an electronic processing means 14.

The pre-processed image data is then provided to the electronic processing means 14 where further image and data processing is carried out by corresponding software. In particular, the image and data processing in the processing means 14 comprises the following functions: identification and classification of possible objects surrounding the motor vehicle, such as pedestrians, other vehicles, bicyclists or large animals; tracking over time the position of identified object candidates in the recorded images; activation or control of driver assistance means 18, 19, ... depending on the result of the object detection and tracking processing. Expediently, the electronic processing means 14 has access to an electronic memory means 25. The driver assistance means 18, 19, ... may in particular comprise a display means 18 for displaying information relating to an identified object and/or to provide an optical collision warning to the driver. The driver assistance means 18, 19, ... may further comprise a warning means 19 adapted to provide a collision warning to the driver by suitable optical, acoustical and/or haptical warning signals; one or more safety systems, in particular restraint systems such as occupant airbags or safety belt tensioners, pedestrian airbags, hood lifters and the like, and/or dynamic vehicle control systems such as brakes.

The electronic processing means 14 is preferably programmed or programmable and may comprise a microprocessor or microcontroller. The image pre-processor 13, the electronic processing means 14 and the memory means 25 are preferably realised in an on-board electronic control unit (ECU) and may be connected to the imaging means 11 via a separate cable or alternatively via a vehicle data bus. In another embodiment the ECU and an imaging device 12 can be integrated into a single unit. All steps from imaging, image pre-processing, image processing to activation or control of driver assistance means 18, 19, ... are performed automatically and continuously during driving in real time.

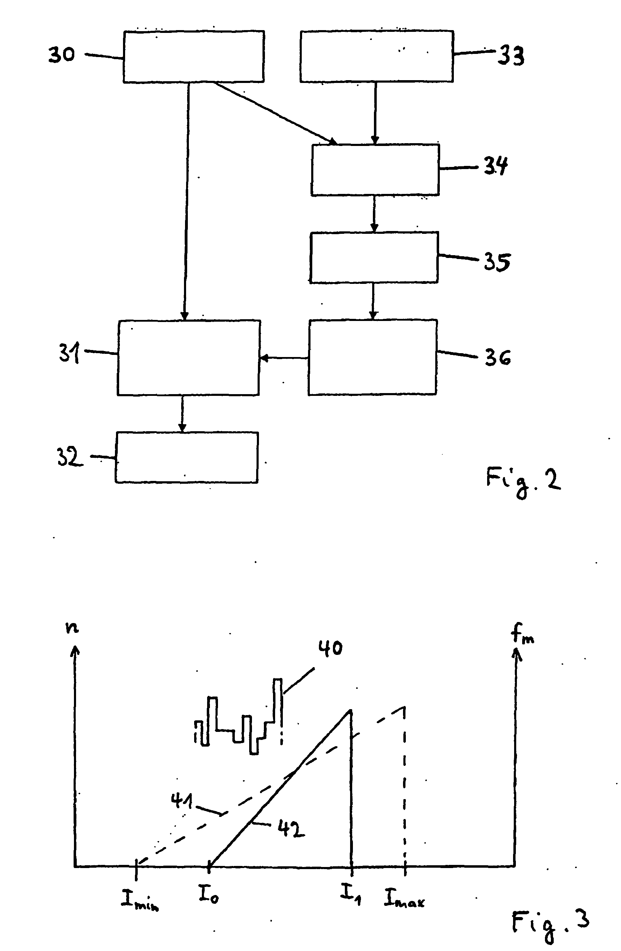

In the processing means 14, before the object identification process an intensity range reduction process is applied to images recorded by the imaging means 11, as illustrated in Fig. 2. Alternatively, the intensity range reduction process may be carried out in the image pre-processor 13.

In the following it shall be assumed by way of example that 8-bit processing is used in the further image processing, i.e. values between 0 and 255 are available for representing the intensity range to be processed further. In a straightforward manner for example the lowest intensity value Imin could be assigned to 0, the largest intensity value Imin could be assigned to 255, and the intensity values between Imin and Imax could be linearly scaled between 0 and 255. This would correspond to an overall linear mapping-function fm represented by a dashed line 41 in Fig. 3.

According to the invention, however, a range reduction algorithm 31 is applied to the raw image data 30 recorded by the imaging means 11. The range reduction algorithm 31 applies a mapping function fm suited to clip less interesting regions from the intensity spectrum, thus providing a higher contrast to the remaining intensity regions presumed to contain interesting information, like objects to be detected in the present application. In the present embodiment, a range reduction mapping function 42 is used which is adapted to clip parts of the intensity spectrum with intensities lower than a first threshold 10, i.e. with intensities between Imin and 10, and with intensities higher than a second threshold I1, i.e. with intensities between 11 and Imax, and linearly maps the intensity values between the thresholds 10 and 11 to the available values, in the present example between 0 and 255. The corresponding range reduced image 32 is used in the data processing means 14 for further image processing.

In alternative embodiments, for example, linear mapping functions extending between Imin and I1, or between 10 and Imax, may be used. Furthermore, the invention is not limited to linear mapping; other mapping functions like logarithmic mapping functions may be used.

In the intensity range reduction process, the range reduction parameters, in this case the intensity thresholds I0, I1, are preferably no pre-set fixed values, but are optimally chosen for the image data under consideration, in particular for each recorded image, in order to allow for a dynamical adaptation of the range reduction algorithm to different conditions.

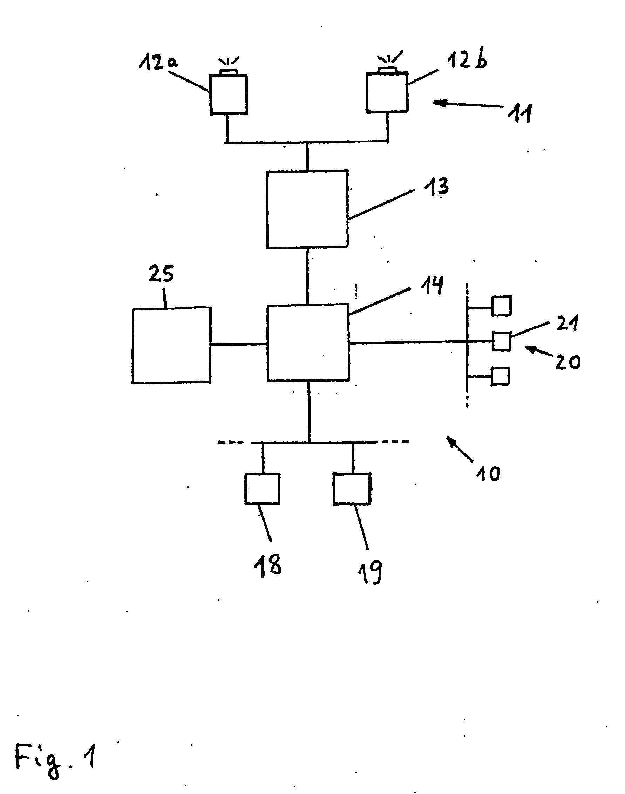

A preferred method to determine optimal range reduction parameters for a recorded image comprises extracting a characteristic feature vector 34 from the raw image 30, preferably also using sensor data 33 from vehicle-mounted sensors 20 (see Fig. 1), in particular an ambient temperature as measured by a vehicle-mounted ambient temperature sensor 21. A feature vector 34 may for example be an image histogram as shown in Fig. 3, which only schematically shows an intensity spectrum histogram 40 of a recorded image, giving the number of pixels n for which the intensity I has a particular value, or lies within a particular intensity interval ΔI. The whole intensity spectrum lies between the minimum intensity Imin and the maximum intensity Imax in the image under consideration.

The feature vector 34 is subjected to a regression function 35 which is adapted to calculate optimal range reduction parameters 36, here intensity thresholds I0, I1, from an input feature vector 34. The optimal range reduction parameters 36 are then provided to the range reduction algorithm 31 in order to allow for an optimal range reduction of the recorded image under consideration, i.e. a range reduction maximizing the contrast in the interesting intensity range from I0 to I1 while minimizing the information loss caused by clipping intensity values beyond the intensity thresholds I0, I1.

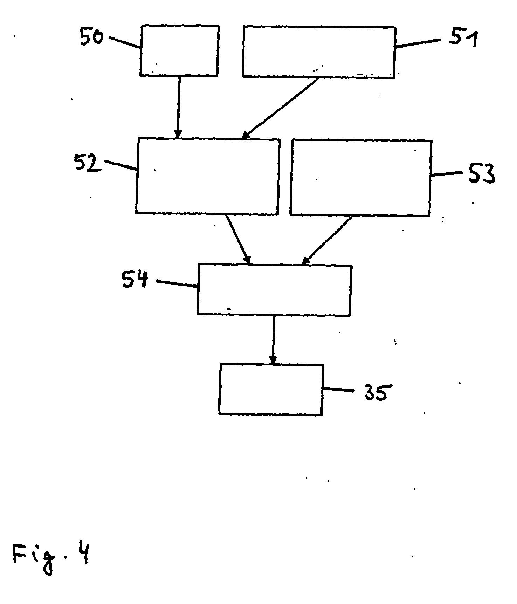

A preferred method of designing a regression function 35 which is suited for being used in the range reduction algorithm described above by training is illustrated in Fig. 4. Here, a feature vector 52 is extracted from training image data 50, further using sensor data 51 from vehicle-mounted sensors at the time of taking the training images 50, in the same manner as described for feature vector 34 in Fig. 2. The feature vectors 52 are input into a machine learning algorithm 54 together with ground truth range reduction parameters 53. In the present case, these are intensity thresholds I0, I1 which are chosen such that the intensity region between the thresholds I0 and I1 precisely defines the intensity region of interest for the particular application. In a thermal pedestrian recognition system, for example, the thresholds I0, I1 are chosen to form an intensity region which is as narrow as possible while covering essentially all temperatures practically exhibited by pedestrians. Training the machine learning algorithm 54 with training data from a sufficiently large number of training images 50 yields an approximately optimal regression function 35 to be used in the range reduction algorithm.

## Claims

1. A driver assistance system (10) for a motor vehicle, comprising an imaging means (11) adapted to record images from a surrounding of the motor vehicle, a processing means (14) adapted to perform image processing of images recorded by said imaging means (11), and driver assistance means (18, 19) controlled depending on the result of said image processing, wherein said processing means (14) is adapted to apply an intensity range reduction algorithm (31), which reduces the range of intensities of the input image which are mapped to the output range, to the image data (30) recorded by said imaging means (11), wherein said intensity range reduction algorithm (31) uses at least one range reduction parameter (36) estimated from said image data (30), **characterized in that** said at least one range reduction parameter (36) is estimated by a regression function (35) from a feature rector (34) derived from said image data (30) also using sensor data (33) from at least one vehicle mounted sensor (21) different from said imaging means (11), and said regression function (35) is obtained by a training algorithm (54) from training image data (50), wherein in the training, a feature vector (52) is extracted from said training image data (50) using sensor data (51) from vehicle mounted sensors at the time of taking the training images, in the same manner as described for feature vector (34).

2. The system as claimed in claim 1, wherein said at least one range reduction parameter (36) comprises at least one intensity threshold (I0, I1).

3. The system as claimed in any one of the preceding claims, wherein said characteristic quantity (34) comprises an image histogram (40) of said image data (30).

4. The system as claimed in any one of the preceding claims, wherein said training algorithm (54) is based on non-parametric regression.

5. The system as claimed in any one of the preceding claims, wherein said training data comprises a plurality of feature vectors (52) derived from said training image data (50).

6. The system as claimed in any one of the preceding claims, wherein said training data comprises at least one predetermined range reduction parameter (53) for every training image.

7. The system as claimed in claim 1, wherein for a particular training image (50) said predetermined range reduction parameter (53) is automatically chosen such that the corresponding intensity range includes the intensities of at least one selected area in said training image (50).

8. The system as claimed in claim 1, wherein said predetermined range reduction parameter can be set manually.

9. A method for determining a regression function used to estimate range reduction parameters for an intensity range reduction algorithm in a driver assistance method for a motor vehicle, said driver assistance method comprising recording images from a surrounding of the motor vehicle by an imaging means, performing image processing of said recorded images, controlling driver assistance means depending on the result of said image processing, and applying said intensity range reduction algorithm, which reduces the range of intensities of the input image which are mapped to the output range, to said recorded image data, wherein said intensity range reduction algorithm uses at least one range reduction parameter estimated from said image data, **characterized in that** said at least one range reduction parameter is estimated by a regression function from a feature vector (34) derived from said image data also using sensor data from at least one vehicle mounted sensor different from said imaging means, and said regression function is obtained by training a machine learning algorithm by training image data, wherein in the training, a feature vector is extracted from said training image data using sensor data from vehicle mounted sensors at the time of taking the training images, in the same manner as described for the feature vector (34).

## Patentansprüche

1. Fahrerassistenzsystem (10) für ein Kraftfahrzeug, umfassend ein Bilderzeugungsmittel (11), das so ausgelegt ist, dass es Bilder von einer Umgebung des Kraftfahrzeugs aufzeichnet, ein Verarbeitungsmittel (14), das so ausgelegt ist, dass es die Bildverarbeitung von Bildern vornimmt, die von dem Bilderzeugungsmittel (11) aufgezeichnet werden, und Fahrerassistenzmittel (18, 19), die abhängig von dem Ergebnis der Bildverarbeitung gesteuert werden, wobei das Verarbeitungsmittel (14) so ausgelegt ist, dass es einen Intensitätsbereichsverkleinerungsalgorithmus (31), der den Bereich der Intensitäten des Eingangsbilds verkleinert, die dem Ausgangsbereich zugeordnet sind, auf die Bilddaten (30) anwendet, die von dem Bilderzeugungsmittel (11) aufgezeichnet werden, wobei der Intensitätsbereichsverkleinerungsalgorithmus (31) mindestens einen Bereichsverkleinerungsparameter (36) verwendet, der aus den Bilddaten (30) berechnet wird, **dadurch gekennzeichnet, dass** der mindestens eine Bereichsverkleinerungsparameter (36) durch eine Regressionsfunktion (35) aus einem Merkmalsvektor (34) berechnet wird, der auch unter Verwendung von Sensordaten (33) von mindestens einem am Fahrzeug montierten Sensor (21), der sich von dem Bilderzeugungsmittel (11) unterscheidet, aus den Bilddaten (30) abgeleitet wird, und die Regressionsfunktion (35) durch einen Trainingsalgorithmus (54) aus Trainingsbilddaten (50) erhalten wird, wobei bei dem Training ein Merkmalsvektor (52) aus den Trainingsbilddaten (50) unter Verwendung von Sensordaten (51) aus am Fahrzeug montierten Sensoren zum Zeitpunkt des Aufnehmens der Trainingsbilder gewonnen wird, auf dieselbe Weise, wie für den Merkmalsvektor (34) beschrieben ist.

2. System nach Anspruch 1, wobei der mindestens eine Bereichsverkleinerungsparameter (36) mindestens eine Intensitätsschwelle (I0, I1) umfasst.

3. System nach einem der vorhergehenden Ansprüche, wobei die Kenngröße (34) ein Bildhistogramm (40) der Bilddaten (30) umfasst.

4. System nach einem der vorhergehenden Ansprüche, wobei der Trainingsalgorithmus (54) auf nichtparametrischer Regression beruht.

5. System nach einem der vorhergehenden Ansprüche, wobei die Trainingsdaten eine Vielzahl von Merkmalsvektoren (52) umfassen, die aus den Trainingsbilddaten (50) abgeleitet sind.

6. System nach einem der vorhergehenden Ansprüche, wobei die Trainingsdaten mindestens einen festgelegten Bereichsverkleinerungsparameter (53) für jedes Trainingsbild umfassen.

7. System nach Anspruch 1, wobei für ein bestimmtes Trainingsbild (50) der festgelegte Bereichsverkleinerungsparameter (53) automatisch derart ausgewählt wird, dass der entsprechende Intensitätsbereich die Intensitäten von mindestens einem ausgewählten Bereich in dem Trainingsbild (50) umfasst.

8. System nach Anspruch 1, wobei der festgelegte Bereichsverkleinerungsparameter manuell eingestellt werden kann.

9. Verfahren zum Bestimmen einer Regressionsfunktion, die zum Berechnen von Bereichsverkleinerungsparametern für einen Intensitätsbereichsverkleinerungsalgorithmus in einem Fahrerassistenzverfahren für ein Kraftfahrzeug verwendet wird, wobei das Fahrerassistenzverfahren das Aufzeichnen von Bildern von einer Umgebung des Kraftfahrzeugs durch ein Bilderzeugungsmittel, das Vornehmen der Bildverarbeitung von den aufgezeichneten Bildern, das Steuern von Fahrerassistenzmitteln abhängig von dem Ergebnis der Bildverarbeitung und das Anwenden des Intensitätsbereichsverkleinerungsalgorithmus, der den Bereich der Intensitäten des Eingangsbilds verkleinert, die dem Ausgangsbereich zugeordnet sind, auf die aufgezeichneten Bilddaten umfasst, wobei der Intensitätsbereichsverkleinerungsalgorithmus mindestens einen Bereichsverkleinerungsparameter verwendet, der aus den Bilddaten berechnet wird, **dadurch gekennzeichnet, dass** der mindestens eine Bereichsverkleinerungsparameter durch eine Regressionsfunktion aus einem Merkmalsvektor (34) berechnet wird, der auch unter Verwendung von Sensordaten von mindestens einem am Fahrzeug montierten Sensor, der sich von dem Bilderzeugungsmittel unterscheidet, aus den Bilddaten abgeleitet wird, und die Regressionsfunktion durch Trainieren eines Maschinenlernalgorithmus mit Trainingsbilddaten erhalten wird, wobei bei dem Training ein Merkmalsvektor aus den Trainingsbilddaten unter Verwendung von Sensordaten aus am Fahrzeug montierten Sensoren zum Zeitpunkt des Aufnehmens der Trainingsbilder gewonnen wird, auf dieselbe Weise, wie für den Merkmalsvektor (34) beschrieben ist.

## Revendications

1. Système d'assistance au conducteur (10) pour un véhicule à moteur, comprenant un moyen d'imagerie (11) adapté pour enregistrer des images d'un environnement du véhicule à moteur, un moyen de traitement (14) adapté pour exécuter un traitement d'image d'images enregistrées par ledit moyen d'imagerie (11), et des moyens d'assistance au conducteur (18, 19) commandés en fonction du résultat dudit traitement d'image, dans lequel ledit moyen de traitement (14) est adapté pour appliquer un algorithme de réduction de gamme d'intensité (31), qui réduit la gamme d'intensités de l'image d'entrée qui sont attribuées à la gamme de sortie, aux données d'image (30) enregistrées par ledit moyen d'imagerie (11), dans lequel ledit algorithme de réduction de gamme d'intensité (31) utilise au moins un paramètre de réduction de gamme (36) estimé à partir desdites données d'image (30), **caractérisé en ce que** ledit au moins un paramètre de réduction de gamme (36) est estimé par une fonction de régression (35) à partir d'un vecteur de caractéristiques (34) dérivé desdites données d'image (30) en utilisant également des données de capteur (33) d'au moins un capteur monté sur le véhicule (21) différent dudit moyen d'imagerie (11), et ladite fonction de régression (35) est obtenue par un algorithme d'apprentissage (54) de données d'image d'apprentissage (50), dans lequel pendant l'apprentissage, un vecteur de caractéristiques (52) est extrait desdites données d'image d'apprentissage (50) en utilisant des données de capteur (51) de capteurs montés sur le véhicule au moment de la prise des images d'apprentissage, de la même manière que décrite pour le vecteur de caractéristiques (34).

2. Système selon la revendication 1, dans lequel ledit au moins un paramètre de réduction de gamme (36) comprend au moins un seuil d'intensité (I0, I1).

3. Système selon l'une quelconque des revendications précédentes, dans lequel ladite grandeur caractéristique (34) comprend un histogramme d'image (40) desdites données d'image (30).

4. Système selon l'une quelconque des revendications précédentes, dans lequel ledit algorithme d'apprentissage (54) est basé sur une régression non paramétrique.

5. Système selon l'une quelconque des revendications précédentes, dans lequel lesdites données d'apprentissage comprennent une pluralité de vecteurs de caractéristiques (52) dérivés desdites données d'image d'apprentissage (50).

6. Système selon l'une quelconque des revendications précédentes, dans lequel lesdites données d'apprentissage comprennent au moins un paramètre de réduction de gamme prédéterminé (53) pour chaque image d'apprentissage.

7. Système selon la revendication 1, dans lequel pour une image d'apprentissage particulière (50) ledit paramètre de réduction de gamme prédéterminé (53) est choisi automatiquement de sorte que la gamme d'intensité correspondante comporte les intensités d'au moins une zone sélectionnée dans ladite image d'apprentissage (50).

8. Système selon la revendication 1, dans lequel ledit paramètre de réduction de gamme prédéterminé peut être réglé manuellement.

9. Procédé pour déterminer une fonction de régression utilisée pour estimer des paramètres de réduction de gamme pour un algorithme de réduction de gamme d'intensité dans un procédé d'assistance au conducteur pour un véhicule à moteur, ledit procédé d'assistance au conducteur comprenant l'enregistrement d'images d'un environnement du véhicule à moteur par un moyen d'imagerie, l'exécution d'un traitement d'image desdites images enregistrées, la commande de moyens d'assistance au conducteur en fonction du résultat dudit traitement d'image, et l'application dudit algorithme de réduction de gamme d'intensité, qui réduit la gamme des intensités de l'image d'entrée qui sont attribuées à la gamme de sortie, auxdites données d'image enregistrées, dans lequel ledit algorithme de réduction de gamme d'intensité utilise au moins un paramètre de réduction de gamme estimé à partir desdites données d'image, **caractérisé en ce que** ledit au moins un paramètre de réduction de gamme est estimé par une fonction de régression à partir d'un vecteur de caractéristiques (34) dérivé desdites données d'image en utilisant également des données de capteur d'au moins un capteur monté sur le véhicule différent dudit moyen d'imagerie, et ladite fonction de régression est obtenue en effectuant l'apprentissage d'un algorithme d'apprentissage automatique par des données d'image d'apprentissage, dans lequel dans l'apprentissage, un vecteur de caractéristiques est extrait desdites données d'image d'apprentissage en utilisant des données de capteur de capteurs montés sur le véhicule au moment de la prise des images d'apprentissage, de la même manière que décrite pour le vecteur de caractéristiques (34).
